# EUROPEAN PATENT APPLICATION

(11) **EP 4 804 663 A1**
(43) Date of publication of application: **09.09.2026**
(21) Application number: 23957423.9
(22) Date of filing: 15.11.2023
(51) Int. Cl.: H04W 64/00

(54) **WIRELESS COMMUNICATION METHOD, AND TERMINAL DEVICE, BASE STATION AND POSITIONING SERVER**

(30) Priority: 03.11.2023 WO PCT/CN2023/129811; 10.11.2023 WO PCT/CN2023/131063
(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/131817
(87) International publication number: WO 2025/091568

(57) **Abstract**

A wireless communication method, a terminal device, a base station and a positioning server are provided. The method includes: receiving, by a terminal device, a first positioning signal transmitted by a base station; transmitting, by the terminal device, a second positioning signal to the base station; where the first positioning signal and the second positioning signal are configured for round-trip time (RTT) positioning of the terminal device, a time at which the terminal device receives the first positioning signal is a first time, a time at which the terminal device transmits the second positioning signal is a second time, a difference between the first time and the second time is a first difference value, and the first difference value is determined based on a timing advance (TA). This application proposes another calculation method for the transmission-reception time difference (i.e., the first difference value) of positioning signals on the terminal device side, which determines the first difference value based on TA.

## Description

### CROSS REFERENCE TO RELATED APPLICATIONS

The present application claims priority to PCT Application No. PCT/CN2023/129811, titled "Wireless Communication Method and Communication Device", filed on November 3, 2023; and PCT Application No. PCT/CN2023/131063, titled "Wireless Communication Method and Communication Device", filed on November 10, 2023. The entire contents of the above-listed applications are incorporated herein by reference.

### TECHNICAL FIELD

The present application relates to the field of communications technologies, and more specifically, to a wireless communication method and a communication device.

### BACKGROUND

In a communication system, the positioning of a terminal device can be achieved based on the round trip time (RTT). The base station and the terminal device can determine the RTT by transmitting an uplink (UL) positioning signal and a downlink (DL) positioning signal. Based on the RTT, a positioning server can determine the distance between the terminal device and the base station. Furthermore, using this distance, the positioning server can locate the terminal device.

### SUMMARY

The present application provides a wireless communication method, a terminal device, a base station, and a positioning server. The following describes various aspects of this application.

A first aspect provides a wireless communication method, including: receiving, by a terminal device, a first positioning signal transmitted by a base station; and transmitting, by the terminal device, a second positioning signal to the base station, where the first positioning signal and the second positioning signal are configured for round-trip time (RTT) positioning of the terminal device, a time at which the terminal device receives the first positioning signal is a first time, a time at which the terminal device transmits the second positioning signal is a second time, and a difference between the first time and the second time is a first difference value, which is determined based on a timing advance (TA).

A second aspect provides a wireless communication method, including: transmitting, by a base station, a first positioning signal to a terminal device; and receiving, by the base station, a second positioning signal transmitted by the terminal device, where the first positioning signal and the second positioning signal are configured for RTT-based positioning of the terminal device, a time at which the terminal device receives the first positioning signal is a first time, and a time at which the terminal device transmits the second positioning signal is a second time, and a difference between the first time and the second time is a first difference value, which is determined based on TA.

A third aspect provides a wireless communication method, including: determining, by a positioning server, a first difference value based on TA, where the positioning server performs RTT-based positioning of the terminal device using a first positioning signal and a second positioning signal, a time at which the terminal device receives the first positioning signal transmitted by the base station is a first time, and a time at which the terminal device transmits the second positioning signal to the base station is a second time, and a difference between the first time and the second time is a first difference value.

A fourth aspect provides a terminal device, including: a first receiving unit, configured to receive a first positioning signal transmitted by a base station; and a first transmitting unit, configured to transmit a second positioning signal to the base station, where the first positioning signal and the second positioning signal are configured for RTT-based positioning of the terminal device, a time at which the terminal device receives the first positioning signal is a first time, a time at which the terminal device transmits the second positioning signal is a second time, and a difference between the first time and the second time is a first difference value, which is determined based on TA.

A fifth aspect provides a base station, including: a second transmitting unit, configured to transmit a first positioning signal to a terminal device; and a second receiving unit, configured to receive a second positioning signal transmitted by the terminal device, where the first positioning signal and the second positioning signal are configured for RTT-based positioning of the terminal device, a time at which the terminal device receives the first positioning signal is a first time, a time at which the terminal device transmits the second positioning signal is a second time, and a difference between the first time and the second time is a first difference value, which is determined based on TA.

A sixth aspect provides a positioning server, including: a determination unit, configured to determine a first difference value based on TA, where the positioning server performs RTT-based positioning of the terminal device using a first positioning signal and a second positioning signal, a time at which the terminal device receives the first positioning signal transmitted by the base station is a first time, a time at which the terminal device transmits the second positioning signal to the base station is a second time, and a difference between the first time and the second time is a first difference value.

A seventh aspect provides a terminal device, including a processor and a memory, the memory is configured to store one or more computer programs, and the processor is configured to invoke the computer programs in the memory to cause the terminal device to perform some or all of the steps of the method in the first aspect.

An eighth aspect provides a base station, including a processor and a memory, the memory is configured to store one or more computer programs, and the processor is configured to invoke the computer programs in the memory to cause the base station to perform some or all of the steps of the method in the second aspect.

A ninth aspect provides a positioning server, including a processor and a memory, the memory is configured to store one or more computer programs, and the processor is configured to invoke the computer programs in the memory to cause the positioning server to perform some or all of the steps of the method in the third aspect.

In a tenth aspect, an embodiment of this application provides a communication system, including the aforementioned communication device. In another possible design, the system may further include other devices that interact with the communication device in the solution provided by the embodiments of this application.

In an eleventh aspect, an embodiment of this application provides a computer-readable storage medium storing a computer program that causes a communication device to perform some or all of the steps of the methods in the aforementioned aspects.

In a twelfth aspect, an embodiment of this application provides a computer program product, including a non-transitory computer-readable storage medium storing a computer program, the computer program is operable to cause a communication device to perform some or all of the steps of the methods in the aforementioned aspects. In some implementations, the computer program product may be a software installation package.

In a thirteenth aspect, an embodiment of this application provides a chip, including a memory and a processor, the processor may invoke and run a computer program from the memory to perform some or all of the steps described in the methods of the aforementioned aspects.

This application proposes another method for determining the transmission-reception time difference (i.e., the first difference value) of positioning signals on the terminal device side-namely, determining the first difference value based on TA. In cases where it is inconvenient to obtain the first difference value directly from the terminal device, this application enables the positioning of the terminal device by determining the first difference value using TA.

### BRIEF DESCRIPTION OF THE DRAWINGS

FIG. 1 is a schematic diagram of a wireless communication system to which the embodiments of this application are applied.
FIG. 2A is an exemplary diagram of a method for determining RTT.
FIG. 2B is an exemplary diagram of single-path delay.
FIG. 3 is an exemplary diagram of a multi-RTT positioning scenario.
FIG. 4 is a schematic flowchart of a wireless communication method provided by an embodiment of this application.
FIG. 5 is an exemplary timing diagram provided by an embodiment of this application.
FIG. 6 is another exemplary timing diagram provided by an embodiment of this application.
FIG. 7 is another exemplary timing diagram provided by an embodiment of this application.
FIG. 8 is another exemplary timing diagram provided by an embodiment of this application.
FIG. 9 is a schematic structural diagram of a terminal device provided by an embodiment of this application.
FIG. 10 is a schematic structural diagram of a base station provided by an embodiment of this application.
FIG. 11 is a schematic structural diagram of a positioning server provided by an embodiment of this application.
FIG. 12 is a schematic structural diagram of a communication device provided by an embodiment of this application.

### DETAILED DESCRIPTION OF THE EMBODIMENTS

The technical solutions in this application will be described below with reference to the accompanying drawings.

### Communication System

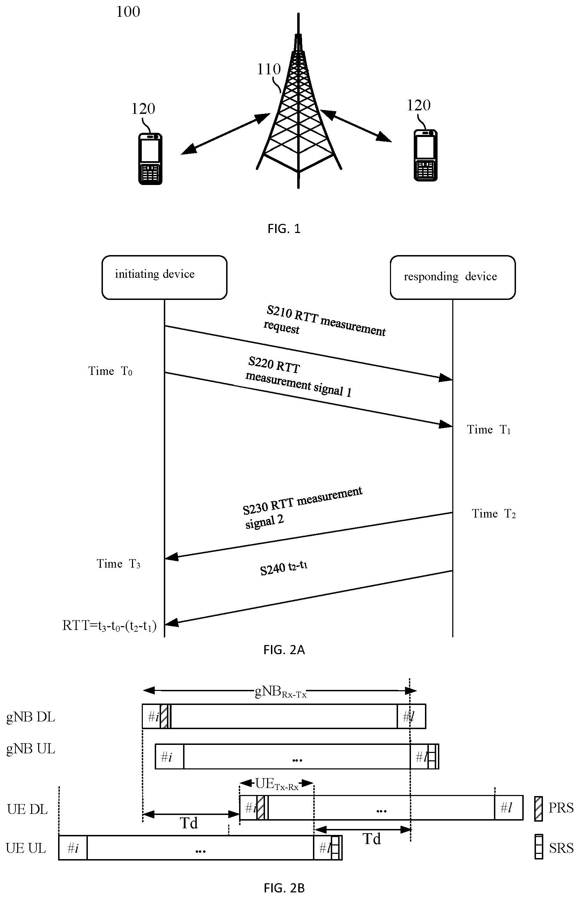

FIG. 1 shows a wireless communication system 100 to which embodiments of this application are applied. The wireless communication system 100 may include communication devices, which may comprise a network device 110 and terminal devices 120. The network device 110 may be a device that communicates with terminal devices 120.

While FIG. 1 exemplarily shows one network device and two terminals, optionally, the wireless communication system 100 may include multiple network devices, and other quantities of terminal devices may be included in the coverage area of each network device, which is not limited in the embodiments of this application.

Optionally, the wireless communication system 100 may further include other network entities such as network controllers and mobility management entities, which are not limited in the embodiments of this application.

It should be understood that the technical solutions of the embodiments of this application may be applied to various communication systems, for example: fifth-generation (5G) systems or new radio (NR), long-term evolution (LTE) systems, LTE frequency division duplex (FDD) systems, LTE time division duplex (TDD) systems, etc. The technical solutions provided in this application may also be applied to future communication systems, such as sixth-generation mobile communication systems, satellite communication systems, and so on.

The terminal devices in the embodiments of this application may also be referred to as user equipment (UE), access terminals, subscriber units, subscriber stations, mobile stations, mobile terminals (MT), remote stations, remote terminals, mobile devices, user terminals, terminals, wireless communication devices, user agents, or user apparatuses. The terminal devices in the embodiments of this application may refer to devices that provide users with voice and/or data connectivity and may be used to connect people, objects, and machines, such as handheld devices with wireless connectivity, vehicle-mounted devices, etc. The terminal devices in the embodiments of this application may be mobile phones, tablets, laptops, handheld computers, mobile internet devices (MID), wearable devices, virtual reality (VR) devices, augmented reality (AR) devices, wireless terminals in industrial control, wireless terminals in self-driving, wireless terminals in remote medical surgery, wireless terminals in smart grids, wireless terminals in transportation safety, wireless terminals in smart cities, wireless terminals in smart homes, etc. Optionally, a UE may serve as a base station. For example, a UE may act as a scheduling entity that provides sidelink signals between UEs in vehicle-to-everything (V2X) or device-to-device (D2D) communications. For instance, a cellular phone and a car may communicate with each other using sidelink signals. A cellular phone and a smart home device may communicate without relaying communication signals through a base station.

The network device in the embodiments of this application may be a device for communicating with terminal devices. The network device may also include access network devices. An access network device may provide communication coverage for a specific geographic area and may communicate with terminal devices 120 located within the coverage area. The access network device may also be referred to as a wireless access network device or a base station, etc. The access network device in the embodiments of this application may refer to a radio access network (RAN) node (or device) that connects terminal devices to a wireless network. The access network device may broadly cover various names or be interchangeable with the following: NodeB, evolved NodeB (eNB), next-generation NodeB (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node, etc. The base station may be a macro base station, micro base station, relay node, donor node, or the like, or a combination thereof. The base station may also refer to a communication module, modem, or chip installed in the aforementioned devices or apparatuses. The base station may also be a mobile switching center, as well as devices that perform base station functions in D2D, V2X, machine-to-machine (M2M) communications, network-side devices in 6G networks, or devices that perform base station functions in future communication systems. The base station may support networks with the same or different access technologies. The embodiments of this application do not limit the specific technology or device form adopted by the access network device.

The base station may be fixed or mobile. For example, a helicopter or drone may be configured to act as a mobile base station, and one or more cells may move according to the location of the mobile base station. In other examples, a helicopter or drone may be configured to serve as a device that communicates with another base station.

The communication devices involved in the wireless communication system may include not only access network devices and terminal devices but also core network elements. Core network elements may be implemented through devices, i.e., core network elements are core network devices.

The core network elements in the embodiments of this application may include elements that process and forward user signaling and data. For example, core network devices may include core access and mobility management function (AMF), session management function (SMF), user plane gateways, location management function (LMF), and other core network devices. Among them, the user plane gateway may be a server with functions such as mobility management, routing, and forwarding of user plane data, generally located on the network side, such as a serving gateway (SGW), packet data network gateway (PGW), or user plane function (UPF). Of course, the core network may also include other elements, which are not exhaustively listed here.

In some deployments, the network device in the embodiments of this application may refer to a CU or DU, or the network device may include both CU and DU. A gNB may also include an AAU.

Network devices and terminal devices may be deployed on land, including indoors or outdoors, handheld or vehicle-mounted; they may also be deployed on water surfaces; or they may be deployed in the air on aircraft, balloons, and satellites. The embodiments of this application do not limit the scenarios in which network devices and terminal devices are located.

It should be understood that all or part of the functions of the communication devices in this application may also be implemented through software functions running on hardware or through virtualized functions instantiated on platforms (e.g., cloud platforms).

### TA

In wireless communications, uplink transmissions may use discrete Fourier transform spread OFDM (DFT-s-OFDM), causing the entire frequency band corresponding to the same symbol to be shared among multiple users. To ensure the orthogonality of uplink signals from different users, the communication system requires that the time difference of signals from different terminal devices arriving at the serving cell base station does not exceed the time length corresponding to the cyclic prefix (CP). For this reason, terminal devices farther from the base station need to transmit signals earlier than those closer to the base station. The base station may indicate the amount of time by which transmission needs to be advanced. For example, the base station may notify the terminal device of the time advance required for uplink transmission through a timing advance command (TAC). Alternatively, the terminal device may adjust the transmission timing based on measurements.

Based on TA, the terminal device can adjust the timing of uplink transmissions. That is, the terminal device may advance the transmission of uplink symbols according to commands used for physical uplink shared channel (PUSCH), physical uplink control channel (PUCCH), and sounding reference signal (SRS) transmissions.

### Positioning Technology

As communication technologies become more mature, some communication systems (e.g., 5G systems) can implement an increasing number of communication algorithms. These communication algorithms may include high-rate information transmission, positioning technologies, etc. For example, terminal device positioning can be achieved not only through GNSS but also through communication algorithms to meet the requirements of communication systems.

Some wireless communication systems may include servers. The calculation of position coordinates for terminal devices may be performed in such servers. These servers may also be referred to as positioning servers.

Positioning servers may be network devices with positioning functions provided by operators. Such network devices with positioning functions may be core network devices or cloud servers. For example, the positioning servers involved in the embodiments of this application may include one or more of the following: location management function (LMF), location management component (LMC), and local location management function (LLMF) located in network devices, which is not limited in the embodiments of this application.

Among positioning technologies, RTT positioning technology is prioritized due to its high accuracy and independence from timing synchronization between network devices and terminal devices. The RTT positioning technology is described below.

### RTT Positioning

In communication systems, RTT positioning can determine the location of a responding device based on positioning signals transmitted between the responding device and an initiating device. The positioning signals may, for example, be reference signals or pilot signals. In some embodiments, such positioning signals may also be referred to as RTT measurement signals.

The responding device may be the device to be positioned. The initiating device may be the device used to position the responding device. For example, the responding device may be a terminal device, and the initiating device may be a base station.

It should be noted that, for ease of description, the following embodiments primarily use the terminal device as the responding device for explanation, i.e., the positioning of the terminal device is discussed. This application may also be applied to the positioning of other communication devices. For the positioning of other communication devices, the "terminal device" in the embodiments may be replaced with the corresponding communication device.

FIG. 2 is an exemplary diagram of an RTT positioning method. The method shown in FIG. 2 may include steps S210 to S240.

Step S210: the initiating device transmits an RTT measurement request to the responding device.

Step S220: the initiating device transmits RTT measurement signal 1 to the responding device.

The initiating device transmits RTT measurement signal 1 at time t0. Due to transmission delay, the responding device receives RTT measurement signal 1 at time t1. That is, the time of arrival (TOA) of RTT measurement signal 1 is time t1.

RTT measurement signal 1 may, for example, include a downlink (DL) positioning reference signal (PRS).

Step S230: the responding device transmits RTT measurement signal 2 to the initiating device.

The responding device transmits RTT measurement signal 2 at time t2. Due to transmission delay, the initiating device receives RTT measurement signal 2 at time t3. That is, the TOA of RTT measurement signal 2 is time t3.

RTT measurement signal 2 may, for example, include a sounding reference signal (SRS).

When the initiating device is a base station, the difference between t3 and t0 (t3 - t0) may be expressed as the base station's transmission-reception time difference. The base station's transmission-reception time difference (abbreviated as Tx-Rx difference) may, for example, be denoted as gNB_{Rx-Tx}. For ease of description, the Tx-Rx difference of the initiating device in the following text is represented by gNB_{Rx-Tx} as an example.

In some embodiments, gNB_{Rx-Tx} may satisfy: gNB_{Rx-Tx} = T_{gNB-RX} - T_{gNB-TX}. Here, T_{gNB-RX} may be the reception timing of an uplink subframe #i containing an SRS associated with the terminal device at the transmission reference point (TRP), defined by the first detected time path. T_{gNB-TX} may be the TRP transmission timing of the downlink subframe #j closest in time to the subframe #i received from the terminal device. Multiple SRS resources may be used to determine the start of a subframe containing the SRS.

Step S240: the responding device transmits the difference between t2 and t1 (t2 - t1) to the initiating device via an RTT report. When the responding device is a terminal device, the difference between t1 and t2 may be expressed as the terminal device's transmission-reception time difference. The terminal device's transmission-reception time difference (abbreviated as Tx-Rx difference) may, for example, be denoted as UE_{Tx-Rx} or UE_{Rx-Tx}.

In some embodiments, UE_{Tx-Rx} may satisfy: UE_{Tx-Rx} = T_{UE-TX} - T_{UE-RX}. UE_{Rx-Tx} may satisfy: UE_{Rx-Tx} = T_{UE-RX} - T_{UE-TX}. It can be understood that UE_{Tx-Rx} = -UE_{Rx-Tx}. That is, through UE_{Tx-Rx} = -UE_{Rx-Tx,} UE_{Tx-Rx} and UE_{Rx-Tx} can be interchanged.

The Tx-Rx differences UE_{Tx-Rx}, T_{UE-TX}, and T_{UE-RX} may be represented in various ways. For example, T_{UE-RX} may be represented by the timing of the downlink subframe #i received by the terminal device from the transmission point (TP), defined by the first detected time path. T_{UE-TX} may be represented by the terminal device's transmission timing of the uplink subframe #j closest in time to the subframe #i received from the TP. Multiple DL PRSs or channel state information reference signals (CSI-RS) may be used to determine this subframe.

Based on t0, t3, and the received difference between t2 and t1, the RTT can be calculated. For example, the RTT may satisfy: RTT = t3 - t0 - (t2 - t1). Alternatively, based on UE_{Tx-Rx} and gNB_{Rx-Tx,} the RTT can be obtained. That is, the RTT may satisfy: RTT = gNB_{Rx-Tx} - UE_{Tx-Rx}.

Illustratively, the terminal device may transmit an RTT report to the positioning server, which may include the measured UE_{Tx-Rx} for at least one network device. The network device may transmit an RTT report to the positioning server, which may include gNB_{Rx-Tx}. The positioning server may determine the RTT based on RTT = gNB_{Rx-Tx} - UE_{Tx-Rx}. The RTT report may also be referred to as a measurement report.

After obtaining the RTT, the one-way path delay can be derived. For example, the one-way path delay Td may satisfy Td = abs(gNB_{Rx-Tx} - UE_{Tx-Rx}) / 2, or Td = abs(gNB_{Rx-Tx} + UE_{Rx-Tx}) / 2. As shown in FIG. 2B, the time difference between gNB_{Rx-Tx} and UE_{Tx-Rx} equals twice the one-way path delay Td.

A distance d between the initiating device and the responding device may satisfy: d = Td × c, where c represents the speed of light.

Based on the distance between the initiating device and the responding device, the positioning of the responding device can be achieved.

In some embodiments, RTT positioning technology may be combined with angle-of-arrival (AOA) to achieve positioning. For example, when only one initiating device is involved in positioning the responding device, RTT and AOA may be combined for positioning.

In some embodiments, RTT positioning technology may use multiple RTTs for positioning. For example, in a communication system, multiple RTTs between the base station and the terminal device may be measured. Based on multiple RTTs, the distances between the terminal device and each base station can be determined, thereby calculating the terminal device's location.

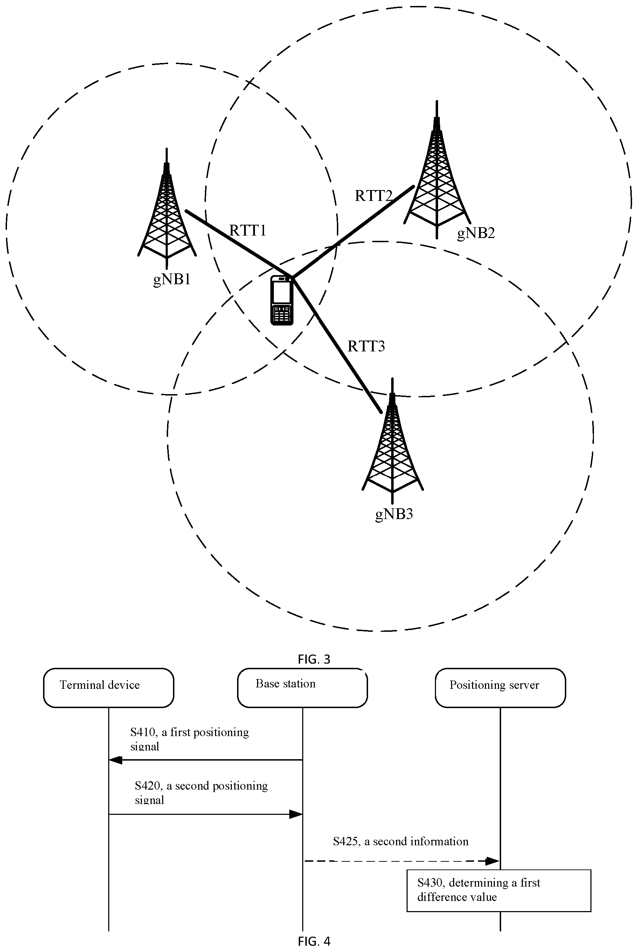

As shown in FIG. 3, the positioning of the terminal device can be achieved using three base stations. In FIG. 3, the three base stations are gNB1, gNB2, and gNB3. Based on RTT1 between gNB1 and the terminal device, RTT2 between gNB2 and the terminal device, and RTT3 between gNB3 and the terminal device, the distances between the terminal device and the corresponding gNBs can be calculated, thereby determining the terminal device's location.

It should be noted that FIG. 3 is merely an example, and positioning of the terminal device may be achieved using other numbers of base stations.

In related technologies, when positioning is performed using multiple base stations, strict synchronization between the base stations is typically required. This is because even minor synchronization errors can lead to significant ranging errors. For example, a 1-nanosecond synchronization error can result in a 0.3-meter ranging error. Therefore, when synchronization accuracy is required at the decimeter level, the synchronization error of base stations must be controlled within nanoseconds. However, this is difficult for base stations to achieve. RTT technology does not require strict synchronization between stations and can be applied both indoors and outdoors.

This application proposes using TA for RTT positioning.

FIG. 4 is a schematic flowchart of a wireless communication method provided by an embodiment of this application.

The method shown in FIG. 4 may be performed by a terminal device and a network device. The network device may include a base station and/or a positioning server. It should be noted that the base station and the positioning server may reside on the same device or on different devices.

It should be noted that the network device may be a terrestrial communication device or a non-terrestrial communication device (e.g., a satellite). That is, the method shown in FIG. 4 may be applied not only to terrestrial network (TN) systems but also to non-terrestrial network (NTN) systems.

The method shown in FIG. 4 may include steps S410 to S430.

Step S410: the base station transmits a first positioning signal to the terminal device.

Step S420: the terminal device transmits a second positioning signal to the base station.

Both the first and second positioning signals are used to achieve positioning of the terminal device. The first positioning signal may be a downlink positioning signal. For example, the first positioning signal may include a PRS. The second positioning signal may be an uplink positioning signal. For example, the second positioning signal may include an SRS.

As mentioned above, RTT positioning of the terminal device can be performed based on the first and second positioning signals. RTT positioning requires determining the transmission-reception time difference. The transmission-reception time difference on the terminal device side may be referred to as a first difference value. The transmission-reception time difference on the base station side may be referred to as a second difference value.

For example, a time at which the terminal device receives the first positioning signal may be referred to as a first time. A time at which the terminal device transmits the second positioning signal may be referred to as a second time. The difference between the first time and the second time may be the first difference value. It can be understood that the first difference value may represent the actual time difference between transmitting the second positioning signal and receiving the first positioning signal by the terminal device, i.e., the actual transmission-reception time difference on the terminal device side.

Similarly, a time at which the base station transmits the first positioning signal may be referred to as a third time. A time at which the base station receives the second positioning signal may be referred to as a fourth time. The difference between the fourth time and the third time may be the second difference value. It can be understood that the second difference value may represent the actual time difference between receiving the second positioning signal and transmitting the first positioning signal by the base station side, i.e., the actual transmission-reception time difference on the base station side.

It should be noted that the "difference between A and B" described in this application may include: A - B, B - A, or abs(A - B), where abs() denotes the absolute value. Therefore, the difference between A and B may be positive, negative, or zero.

The inventors of this application have analyzed that TA actually reflects distance information between the terminal device and the base station. Therefore, this application proposes that RTT positioning can be achieved based on TA.

Illustratively, the first difference value may be determined based on TA. For example, the method shown in FIG. 4 may include step S430. Step S430: the positioning server may determine the first difference value based on TA. Alternatively, the base station may determine the first difference value based on TA and indicate the first difference value to the positioning server.

From this, it can be seen that the network side can determine the first difference value using TA information. Therefore, the terminal device does not need to report the first difference value, thereby reducing the power and resources consumed by reporting the first difference value.

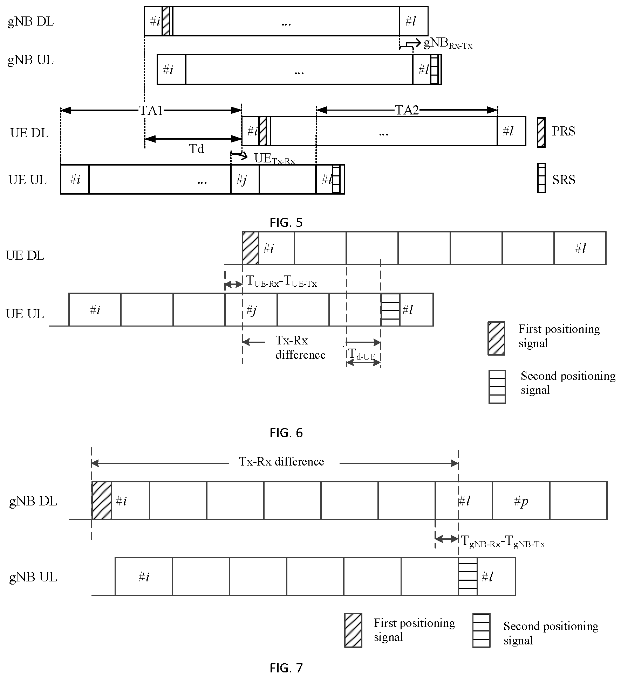

As shown in FIG. 5, when the terminal device reports the transmission-reception time difference, the terminal device uses the timing of the uplink subframe as a reference. However, the actual time of receiving the first signal is determined based on the timing of the downlink subframe to identify the subframe header. As shown by TA1 in FIG. 5, this application proposes that TA1 may be expressed as the sum of an integer number of subframes and a fraction of a subframe. That is, TA may satisfy n * tₛ + t_{0_UE}, where n is an integer, tₛ is the length of one subframe, and t_{0_UE} represents the remaining time after subtracting the integer number of subframes from TA. From FIG. 5, it can be seen that t_{0_UE} is equivalent to UE_{Tx-Rx}.

Thus, it can be concluded that the transmission-reception time difference UE_{Tx-Rx} reported by the terminal device, as marked in FIG. 5, can be reflected by TA information. Alternatively, the TA information can reflect UE_{Tx-Rx}. In other words, TA information may contain t_{0_UE} information.

In some embodiments, the first difference value may be indicated by a first time difference. The first time difference may be the value obtained by taking the remainder of the first difference value divided by the subframe length. That is, the first time difference may be the value remaining after subtracting an integer number of subframes from the first difference value, representing a fraction of a subframe. For example, the first difference value may be: Min(mod(first time - second time, Ts), Ts - mod(first time - second time, Ts)), where Ts is the subframe length.

When the movement speed of the terminal device and/or the base station is slow, the signal propagation delay is less than one subframe. In this case, this application proposes deriving the first time difference by subtracting an integer number of subframes from the first difference value and using the first time difference to represent or indicate the first difference value. That is, the first time difference may represent the transmission-reception time difference on the terminal device side.

The following uses FIG. 6 as an example for explanation. As shown in FIG. 6, the terminal device receives the first positioning signal in downlink subframe i. The uplink subframe closest to downlink subframe i is subframe j. The terminal device transmits the second positioning signal in subframe l. The first difference value may be represented by the "transmission-reception time difference " in FIG. 6. The first time difference may be represented by T_{d-UE} in FIG. 6. According to related technologies, the difference between subframe i and subframe j may be used to represent UE_{Tx-Rx} (i.e., T_{UE-RX} - T_{UE-TX} in FIG. 6). From FIG. 6, it can be seen that T_{UE-RX} - T_{UE-TX} and T_{d_UE} satisfy: abs(T_{UE-RX} - T_{UE-TX}) + abs(T_{d_UE}) = Ts, where Ts represents the subframe length. Considering T_{UE-RX} - T_{UE-TX} as a negative value in FIG. 6, we have T_{d_UE} = Ts + T_{UE-RX} - T_{UE-TX}.

From FIG. 6, it can be seen that T_{d_UE} can not only determine the actual transmission-reception time difference but also determine the value representing the transmission-reception time difference in related technologies (e.g., the difference between subframe i and subframe j).

The terminal device may report information related to the first time difference to the network device. For example, the terminal device may report T_{d_UE} to the network device. Alternatively, the terminal device may report the difference between the first time difference and the subframe length to the network device. Continuing with the example in FIG. 6, the terminal device may report T_{UE-RX} - T_{UE-TX}. It can be understood that, regardless of which information is reported, the information related to the first time difference is less than or equal to the first difference value. Therefore, compared to reporting the first difference value, reporting the first time difference can save communication resources. Alternatively, for the same amount of communication resources, the indication precision of the first time difference can be higher than that of the first difference value.

In some embodiments, the terminal device may transmit first information. The first information may be used to indicate the movement status of the terminal device.

When the propagation delay is comparable to the subframe length, the movement time of the terminal device corresponding to one subframe length is several hundred seconds. For a satellite base station, the movement time corresponding to one subframe length is several tens of seconds. The positioning server may determine whether the propagation time corresponding to the movement distance of the terminal device exceeds one subframe length based on one or more of the following: the movement speed of the satellite base station, the movement speed of the terminal device, or the position calculation result. Therefore, based on the movement status of the terminal device indicated by the first information, it can be determined whether the signal propagation delay is less than one subframe. Alternatively, based on the movement status of the terminal device, it can be judged whether, during the transmission-reception time difference of the base station and/or the terminal device, the terminal device may have moved a distance corresponding to one or more subframes. The specific analysis is as follows.

When the propagation delay is comparable to the subframe length (i.e., the propagation delay is close to or greater than one subframe length), the movement time of the terminal device corresponding to one subframe length is several hundred seconds, and the movement time of the base station (e.g., a non-terrestrial communication base station) corresponding to one subframe length is several tens of seconds. The positioning server may determine whether the propagation time corresponding to the movement distance of the terminal device exceeds one subframe length based on one or more of the following: the movement speed of the base station, the movement speed of the user, or the position calculation result.

In some embodiments, the first information may be used to indicate one or more of the following: whether the terminal device has speed measurement capability; whether the terminal device has obtained the movement speed; the movement speed; whether the terminal device has obtained the movement type of the terminal device; the movement type; whether the terminal device has obtained the range of achievable movement speeds of the terminal device; the range of movement speeds.

The movement type may include the device type of the terminal device. The device type of the terminal device may include: high-speed rail, freight trucks, cars, airplanes, ships, pedestrians, bicycles/shared bikes, etc.

It can be understood that, in some cases, the first information may be used to indicate inherent attributes of the terminal device. Therefore, the first information may be included in the capability information of the terminal device. For example, the first information may be used to indicate one or more of the following: whether the terminal device has speed measurement capability, whether the terminal device has obtained the range of achievable movement speeds of the terminal device, whether the terminal device has obtained the movement type of the terminal device, etc.

In some cases, the first information may be used to indicate dynamic information of the terminal device. For example, the first information may be used to indicate one or more of the following: the movement speed, the range of movement speeds, the movement type.

In some embodiments, the network device may transmit first request information to the terminal device. The first request information may be used to request the terminal device to transmit the first information. In response to receiving the first request information, the terminal device may transmit the first information. For example, if the capability information of the terminal device does not include the first information, the network device may request the first information through the first request information.

Optionally, the first request information may be used to request speed-related information. The first information may include speed-related information. The speed-related information may include one or more of the following: the movement speed of the terminal device, the range of movement speeds, the movement type. When the network device requests speed-related information from the terminal device, the terminal device may report the speed-related information of the terminal device according to the request of the network device.

As mentioned above, the first difference value may be indicated by the first time difference. Similarly, the second difference value may be indicated by a second time difference. The second time difference may be the value obtained by taking the remainder of the second difference value divided by the subframe length. For example, the second time difference may be: Min(mod(time at which the base station receives the second positioning signal - time at which the base station transmits the first positioning signal, Ts), Ts - mod(time at which the base station receives the second positioning signal - time at which the base station transmits the first positioning signal, Ts)), where Ts is the subframe length.

The base station may report the second time difference or the difference between the second time difference and the subframe length to the positioning server. The following uses FIG. 7 as an example for explanation.

As shown in FIG. 7, the subframe in which the base station transmits the first positioning signal is subframe i. The subframe in which the base station receives the second positioning signal is subframe l. The second difference value is marked as "transmission-reception time difference" in FIG. 7. The time corresponding to the second difference value after subtracting an integer number of subframes is T_{d_gNB}. T_{d_gNB} is the second time difference. A duration of T_{d_gNB} and a duration of the transmission-reception difference T_{gNB-RX} - T_{gNB-TX} reported by the base station may be the same. That is, T_{d_gNB} = T_{gNB-RX} - T_{gNB-TX}.

The propagation delay Td between the terminal device and the base station may satisfy: Td = (T₂ + T₁) / 2, where T₂ may represent the second time difference, and T₁ may represent the first time difference.

Combining FIG. 6 and FIG. 7, the one-way propagation time Td between the terminal device and the base station can be calculated. Td may satisfy Td = (T_{d_gNB} + T_{d_UE}) / 2. Substituting T_{gNB-RX} - T_{gNB-TX} and T_{UE-RX} - T_{UE-TX} into this equation, we get Td = [(T_{gNB-RX} - T_{gNB-TX}) + Ts + T_{UE-RX} - T_{UE-TX})] / 2. Ignoring the influence of integer multiples of Ts, Td may satisfy: Td = [(T_{gNB-RX} - T_{gNB-TX}) + T_{UE-RX} - T_{UE-TX})] / 2.

The method shown in FIG. 4 may further include step S425. Step S425: the base station transmits the second information to the positioning server. The second information may be used to indicate TA. Based on TA, the positioning server can determine the transmission-reception time difference on the terminal device side, thereby positioning the terminal device.

In some embodiments, the base station may determine TA and transmit the second information to the positioning server. In some embodiments, TA is determined by the terminal device itself. In this case, the terminal device may transmit the second information. For example, the terminal device may directly transmit the second information to the positioning server. Alternatively, the terminal device may transmit the second information to the base station, which then forwards the second information to the positioning server.

Optionally, the second information may include one or more of the following: the value of TA, the value obtained by taking the remainder of the value of TA divided by the subframe length. It can be understood that the value obtained by taking the remainder of the value of TA divided by the subframe length is less than one subframe in duration.

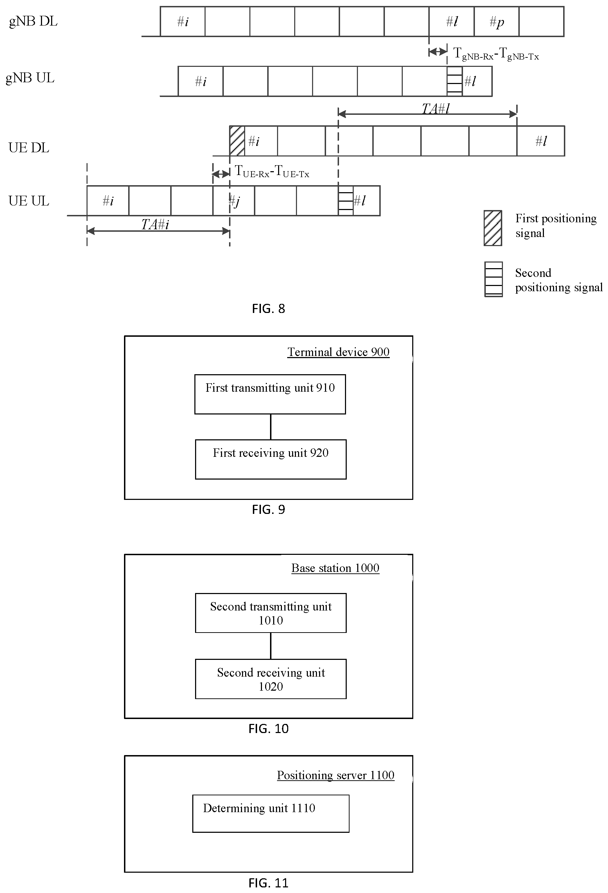

It should be noted that the value of TA may include one or more TA values. For example, the TA corresponding to the time period during which the first positioning signal is transmitted may be a first TA. The TA corresponding to the time period during which the second positioning signal is transmitted may be a second TA. The value of TA may include the first TA and the second TA. That is, the second information may indicate the first TA and/or the second TA. As shown in FIG. 8, the first TA is TA#i in FIG. 8, and the second TA is TA#l in FIG. 8. In this case, the second information may indicate TA#i and TA#l.

Optionally, when the base station transmits the second information, the second information may include one or more of the following: the second difference value, the second time difference, the difference between the first time difference and the second time difference, the difference between the first difference value and the second difference value. As mentioned above, the second difference value may be the actual transmission-reception time difference on the base station side. The second time difference is the value obtained by taking the remainder of the second difference value divided by the subframe length. The first time difference and the second time difference may be the difference between the transmission-reception time difference on the base station side (represented by the second time difference) and the remaining time after subtracting an integer number of subframes from the value of TA.

It can be understood that, when the base station determines TA, the terminal device may not need to report positioning measurements. Only the base station needs to transmit relevant positioning measurement information to the positioning server to achieve RTT positioning of the terminal device. Therefore, the solution provided in this embodiment of the application can reduce the information reported by the terminal device, thereby reducing the occupation of communication resources.

It should be noted that, as can be seen from the above analysis, after subtracting an integer number of subframes from the transmission-reception time difference on the terminal device side, the transmission-reception time difference on the terminal device side can be determined by TA. This requires strict alignment of uplink and downlink on the terminal device side after considering the influence of TA. In other words, when uplink and downlink are synchronized on the terminal device side, the terminal device may not need to report the transmission-reception time difference. From an implementation perspective, since both uplink and downlink are on one side, i.e., on the terminal device side, the clocks for uplink and downlink can be strictly aligned on the terminal device side. Therefore, strict alignment of uplink and downlink on the terminal device side is achievable.

In some embodiments, the terminal device may transmit the third information to the network device. The network device may include the base station and/or the positioning server. The base station may, for example, include the base station corresponding to the serving cell. The third information may be used to indicate or confirm whether the terminal device reports the first difference value.

For example, the third information may be used to indicate whether the terminal device reports the first difference value. That is, the terminal device may inform the network device through the third information whether the terminal device reports the first difference value.

Alternatively, the network device may transmit the fourth information, which may be used to indicate or request whether the terminal device reports the first difference value. In response to receiving the fourth information, the terminal device may transmit the third information. The third information may be used to confirm whether the terminal device reports the first difference value.

In some embodiments, the terminal device may receive the fourth information transmitted by the network device. The network device may include the base station and/or the positioning server. The base station may, for example, include the base station corresponding to the serving cell. The fourth information may be used to indicate or confirm whether the terminal device reports the first difference value.

For example, the fourth information may be used to indicate whether the terminal device reports the first difference value. That is, the terminal device may perform corresponding actions based on the indication of the fourth information.

Alternatively, the terminal device may transmit the third information to request not to transmit the first difference value. The third information may be transmitted during capability reporting. The fourth information may be used to confirm the request of the terminal device. If the fourth information confirms that the terminal device does not need to transmit the first difference value, the terminal device may not transmit the first difference value. If the fourth information confirms that the terminal device cannot avoid transmitting the first difference value, the terminal device still needs to transmit the first difference value.

It should be noted that the "transmitting the first difference value" mentioned above refers to the terminal device transmitting indication information of the first difference value. This application does not limit the specific format of the indication information of the first difference value. In addition, this application does not limit the representation of the first difference value. For example, "transmitting the first difference value" may include: transmitting the first time difference. Alternatively, "transmitting the first difference value" may include: reporting the actual transmission-reception time. Alternatively, "transmitting the first time difference" may include: transmitting the difference between subframe i and subframe j, where subframe i is the subframe in which the first positioning signal is received, and subframe j is the uplink subframe closest to subframe i.

When the terminal device does not need to transmit the first difference value, even if the terminal device does not receive the first positioning signal, the terminal device may transmit the second positioning signal. The network device can determine the signal propagation delay based on the time of receiving the second positioning signal, the time of transmitting the first positioning signal, and TA, thereby performing positioning.

In some embodiments, the terminal device may adjust TA based on the detected first positioning signal and synchronization signal. In some cases, the accuracy of downlink synchronization of the terminal device is lower than the estimation accuracy required for positioning. After detecting the first positioning signal, the terminal device can obtain more accurate downlink signal arrival time accuracy. This accuracy may be higher or even much higher than the synchronization time accuracy. Therefore, adjusting TA based on the first positioning signal and the synchronization signal can make the transmission-reception time difference on the terminal device side determined based on TA more accurate.

Optionally, the adjusted TA value TA₂ may satisfy: TA₂ = TA₁ - 2ΔT, where TA₁ represents the TA value before adjustment, and ΔT represents the difference between the time when the first positioning signal is detected and the time when the downlink synchronization signal is detected during downlink synchronization. That is, ΔT = time when the first positioning signal is detected - time when the downlink synchronization signal is detected during downlink synchronization. It can be understood that when the time when the first positioning signal is detected is earlier than the time when the synchronization signal is detected, it means that the actual downlink signal delay is smaller, so the uplink signal should be advanced less. When the time when the first positioning signal is detected is later than the time when the synchronization signal is detected, it means that the actual downlink signal delay is larger, so the uplink signal should be advanced more.

It can be understood that, based on this application, the terminal device can perform fine-tuning of uplink transmissions when transmitting uplink signals (e.g., the second positioning signal), enabling the base station to calculate the transmission-reception time difference and/or propagation delay with reliable accuracy.

It should be noted that the adjustment of TA in this application is intended to allow network devices to more accurately calculate the transmission-reception time difference (e.g., the first time difference). The purpose of adjusting TA in this application is not necessarily to ensure the orthogonality of uplink signals from multiple users. If the goal is to ensure the orthogonality of uplink signals, the adjusted TA may satisfy: TA + 2ΔT.

It should be noted that the adjustment of TA based on the first positioning signal and the synchronization signal in this application involves fine-tuning. Therefore, its impact on the orthogonality of uplink signals is minimal. That is, this technical solution can achieve more accurate calculation of the first time difference while maintaining uplink signal orthogonality to a certain extent.

In some embodiments, if the first positioning signal does not satisfy the first condition, the terminal device may refrain from transmitting the second positioning signal and/or the first difference value. For example, if the terminal device is required to report the first difference value but the first positioning signal does not satisfy the first condition, the terminal device may not transmit the first difference value.

It can be understood that the second positioning signal and/or the first difference value may serve as signal acknowledgment feedback. That is, the second positioning signal and/or the first difference value may be used to confirm whether the first positioning signal satisfies the first condition. If the second positioning signal and/or the first difference value is transmitted, the first positioning signal satisfies the first condition; if the second positioning signal and/or the first difference value is not transmitted, the first positioning signal does not satisfy the first condition.

If the terminal device does not correctly receive the first positioning signal but still transmits the second positioning signal, the base station may mistakenly assume that the terminal device correctly received the first positioning signal and/or that the terminal device performed fine-tuning (e.g., adjusted TA) on the uplink timing when transmitting the second positioning signal, leading to incorrect detection results at the base station. Based on this application, if the base station does not receive the second positioning signal and/or the first difference value from the terminal device, the base station can determine that the first positioning signal received by the terminal device does not satisfy the first condition and/or that the terminal device did not perform fine-tuning on the uplink timing, thereby invalidating this positioning measurement.

The first condition may be related to the terminal device's detection of the first positioning signal. For example, the first condition may include one or more of the following: the terminal device detecting the first positioning signal, or the detection accuracy of the first positioning signal by the terminal device being greater than or equal to a first threshold. In other words, the terminal device may transmit the second positioning signal if the terminal device detects the first positioning signal and/or if the detected accuracy of the first positioning signal is sufficiently high.

It should be noted that the first threshold may satisfy one or more of the following: protocol predefinition, presetting, or configuration by the network device. The network device may configure the first threshold via higher-layer signaling.

In some embodiments, if the first positioning signal does not satisfy the first condition, the terminal device may also transmit indication information to indicate that the first positioning signal does not satisfy the first condition. This indication information may be reported on the resource originally intended for reporting the first difference value. For example, when both the terminal device and the base station are required to report their respective transmission-reception time differences, if the terminal device does not detect the first positioning signal, the terminal device may refrain from reporting the first difference value or may report a measurement failure indication on the resource originally allocated for reporting the first difference value.

The method embodiments of this application have been described in detail above. Below, the device embodiments of this application are described in detail. It should be understood that the descriptions of the method embodiments and the device embodiments correspond to each other, so parts not described in detail can refer to the preceding method embodiments.

FIG. 9 is a schematic structural diagram of a terminal device 900 provided by an embodiment of this application. The terminal device 900 includes a first receiving unit 910 and a first transmitting unit 920.

The first receiving unit 910 is configured to receive a first positioning signal transmitted by a base station. The first transmitting unit 920 is configured to transmit a second positioning signal to the base station. The first positioning signal and the second positioning signal are used for round-trip time (RTT) positioning of the terminal device. A time at which the terminal device receives the first positioning signal is a first time, and a time at which the terminal device transmits the second positioning signal is a second time. A difference between the first time and the second time is a first difference value, which is determined based on a timing advance (TA).

In some embodiments, the terminal device 900 is further configured to: transmit a first information, where the first information indicates the movement status of the terminal device.

In some embodiments, the first information indicates one or more of the following: whether the terminal device has speed measurement capability; whether the terminal device has obtained the movement speed; the movement speed; whether the terminal device has obtained the movement type of the terminal device; the movement type; whether the terminal device has obtained the range of achievable movement speeds of the terminal device; the range of movement speeds.

In some embodiments, transmitting the first information includes: transmitting the first information in response to receiving a first request information, where the first request information requests the terminal device to transmit the first information.

In some embodiments, the first difference value is indicated by a first time difference, which is the value obtained by taking the remainder of the first difference value divided by the subframe length.

In some embodiments, the time at which the base station transmits the first positioning signal is a third time, and the time at which the base station receives the second positioning signal is a fourth time. The difference between the fourth time and the third time is a second difference value, which is indicated by a second time difference. The second time difference is the value obtained by taking the remainder of the second difference value divided by the subframe length. The signal propagation delay Td between the terminal device and the base station satisfies: Td = (T₂ + T₁) / 2, where T₂ represents the second time difference, and T₁ represents the first time difference.

In some embodiments, the terminal device 900 is further configured to: transmit second information, where the second information indicates the TA.

In some embodiments, the second information indicates one or more of the following: the value of TA; the value obtained by taking the remainder of the value of TA divided by the subframe length.

In some embodiments, the terminal device 900 is further configured to: transmit a third information, where the third information is configured to indicate or confirm whether the terminal device reports the first difference value.

In some embodiments, the terminal device 900 is further configured to: receive a fourth information, where the fourth information is configured to indicate or confirm whether the terminal device reports the first difference value.

In some embodiments, the terminal device 900 is further configured to: adjust the TA based on detecting the first positioning signal and a synchronization signal.

In some embodiments, the adjusted TA value TA₂ satisfies: TA₂ = TA₁ - 2ΔT, where TA1 is the TA value before adjustment, and ΔT is the difference between the time at which the first positioning signal is detected and the time at which the synchronization signal is detected.

In some embodiments, the first transmitting unit is specifically configured to: refrain from transmitting the second positioning signal and/or the first difference value if the first positioning signal does not satisfy a first condition.

In some embodiments, the first condition includes one or more of the following: the terminal device detecting the first positioning signal; the detection accuracy of the first positioning signal by the terminal device being greater than or equal to a first threshold.

In some embodiments, the first threshold satisfies one or more of the following: protocol predefinition, presetting, or configuration by the network device.

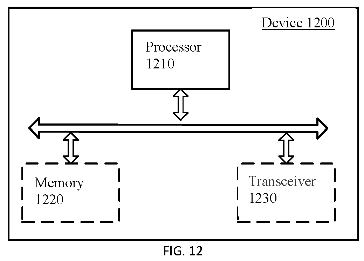

In an optional embodiment, the first receiving unit 910 or the first transmitting unit 920 may be a transceiver 1230. The terminal device 900 may further include a processor 1210 and a memory 1220, as shown in FIG. 12.

FIG. 10 is a schematic structural diagram of a base station 1000 provided by an embodiment of this application. The base station 1000 includes a second transmitting unit 1010 and a second receiving unit 1020.

The second transmitting unit 1010 is configured to transmit a first positioning signal to a terminal device. The second receiving unit 1020 is configured to receive a second positioning signal transmitted by the terminal device. The first positioning signal and the second positioning signal are configured for RTT positioning of the terminal device. A time at which the terminal device receives the first positioning signal is a first time, and a time at which the terminal device transmits the second positioning signal is a second time. The difference between the first time and the second time is a first difference value, which is determined based on TA.

In some embodiments, the base station 1000 is further configured to: receive a first information, where the first information is configured to indicate the movement status of the terminal device.

In some embodiments, the first information is configured to indicate one or more of the following: whether the terminal device has speed measurement capability; whether the terminal device has obtained the movement speed; the movement speed; whether the terminal device has obtained the movement type of the terminal device; the movement type; whether the terminal device has obtained the range of achievable movement speeds of the terminal device; the range of movement speeds.

In some embodiments, receiving the first information includes: receiving the first information in response to transmitting first request information, where the first request information is configured to request the terminal device to transmit the first information.

In some embodiments, the first difference value is indicated by a first time difference, which is the value obtained by taking the remainder of the first difference value divided by the subframe length.

In some embodiments, a time at which the base station transmits the first positioning signal is a third time, and a time at which the base station receives the second positioning signal is a fourth time. The difference between the fourth time and the third time is a second difference value, which is indicated by a second time difference. The second time difference is the value obtained by taking the remainder of the second difference value divided by the subframe length. The signal propagation delay Td between the terminal device and the base station satisfies: Td = (T₂ + T₁) / 2, where T₂ represents the second time difference, and T₁ represents the first time difference.

In some embodiments, the base station 1000 is further configured to: transmit a second information to a positioning server, where the second information indicates the TA.

In some embodiments, the second information indicates one or more of the following: the value of TA; the value obtained by taking the remainder of the value of TA divided by the subframe length; the second time difference; the difference between the first time difference and the second time difference. Here, the time at which the base station transmits the first positioning signal is a third time, and the time at which the base station receives the second positioning signal is a fourth time. The difference between the fourth time and the third time is a second difference value, which is indicated by a second time difference. The second time difference valeu is the value obtained by taking the remainder of the second difference value divided by the subframe length.

In some embodiments, the base station 1000 is further configured to: receive a third information, where the third information is configured to indicate or confirm whether the terminal device reports the first difference value.

In some embodiments, the base station 1000 is further configured to: transmit a fourth information, where the fourth information is configured to indicate or confirm whether the terminal device reports the first difference value.

In some embodiments, the second receiving unit is specifically configured to: refrain from receiving the second positioning signal and/or the first difference value if the first positioning signal does not satisfy a first condition.

In some embodiments, the first condition includes one or more of the following: the terminal device detecting the first positioning signal; the detection accuracy of the first positioning signal by the terminal device being greater than or equal to a first threshold.

In some embodiments, the first threshold satisfies one or more of the following: protocol predefinition, presetting, or configuration by the network device.

In an optional embodiment, the second receiving unit 1020 or the second transmitting unit 1010 may be a transceiver 1230. The base station 1000 may further include a processor 1210 and a memory 1220, as shown in FIG. 12.

FIG. 11 is a schematic structural diagram of a positioning server 1100 provided by an embodiment of this application. The positioning server 1100 includes a determining unit 1110.

The determining unit 1110 is configured to determine a first difference value based on a timing advance (TA). The positioning server performs RTT positioning of the terminal device using a first positioning signal and a second positioning signal. The time at which the terminal device receives the first positioning signal transmitted by the base station is a first time, and the time at which the terminal device transmits the second positioning signal to the base station is a second time. The difference between the first time and the second time is the first difference value.

In some embodiments, the positioning server 1100 is further configured to: receive first information, where the first information is configured to indicate the movement status of the terminal device.

In some embodiments, the first information indicates one or more of the following: whether the terminal device has speed measurement capability; whether the terminal device has obtained the movement speed; the movement speed; whether the terminal device has obtained the movement type of the terminal device; the movement type; whether the terminal device has obtained the range of achievable movement speeds of the terminal device; the range of movement speeds.

In some embodiments, receiving the first information includes: receiving the first information in response to transmitting first request information, where the first request information is configured to request the terminal device to transmit the first information.

In some embodiments, the first difference value is indicated by a first time difference, which is the value obtained by taking the remainder of the first difference value divided by the subframe length.

In some embodiments, the time at which the base station transmits the first positioning signal is a third time, and the time at which the base station receives the second positioning signal is a fourth time. The difference between the fourth time and the third time is a second difference value, which is indicated by a second time difference. The second time difference is the value obtained by taking the remainder of the second difference value divided by the subframe length. The signal propagation delay Td between the terminal device and the base station satisfies: Td = (T₂ + T₁) / 2, where T₂ represents the second time difference, and T₁ represents the first time difference.

In some embodiments, the positioning server 1100 is further configured to: receive the second information, where the second information indicates the TA.

In some embodiments, the second information indicates one or more of the following: the value of TA; the value obtained by taking the remainder of the value of TA divided by the subframe length; the second time difference; the difference between the first time difference and the second time difference. Here, the time at which the base station transmits the first positioning signal is a third time, and the time at which the base station receives the second positioning signal is a fourth time. The difference between the fourth time and the third time is a second difference value, which is indicated by a second time difference. The second time difference is the value obtained by taking the remainder of the second difference value divided by the subframe length.

In some embodiments, the positioning server 1100 is further configured to: receive the third information, where the third information is configured to indicate or confirm whether the terminal device reports the first difference value.

In some embodiments, the positioning server 1100 is further configured to: transmit the fourth information, where the fourth information is configured to indicate or confirm whether the terminal device reports the first difference value.

In an optional embodiment, the determining unit 1110 may be a processor 1210. The positioning server 1100 may further include a transceiver 1230 and a memory 1220, as shown in FIG. 12.

FIG. 12 is a schematic structural diagram of a communication device 1200 provided by an embodiment of this application. The dashed lines in FIG. 12 indicate that the unit or module is optional. The device 1200 may be used to implement the methods described in the foregoing method embodiments. The device 1200 may be a chip, a terminal device, or a network device.

The device 1200 may include one or more processors 1210. The processor 1210 may support the device 1200 in implementing the methods described in the foregoing method embodiments. The processor 1210 may be a general-purpose processor or a dedicated processor. For example, the processor may be a central processing unit (CPU). Alternatively, the processor may be another general-purpose processor, a digital signal processor (DSP), an application-specific integrated circuit (ASIC), a field-programmable gate array (FPGA), or another programmable logic device, a discrete gate or transistor logic device, a discrete hardware component, etc. A general-purpose processor may be a microprocessor, or the processor may be any conventional processor, etc.

The device 1200 may further include one or more memories 1220. The memory 1220 stores a program that can be executed by the processor 1210, causing the processor 1210 to perform the methods described in the foregoing method embodiments. The memory 1220 may be independent of the processor 1210 or integrated into the processor 1210.

The device 1200 may further include a transceiver 1230. The processor 1210 may communicate with other devices or chips via the transceiver 1230. For example, the processor 1210 may transmit or receive data with other devices or chips via the transceiver 1230.

This application further provides a computer-readable storage medium for storing a program. The computer-readable storage medium may be applied to the communication device provided in the embodiments of this application, and the program causes a computer to perform the methods executed by the communication device in the various embodiments of this application.

This application further provides a computer program product. The computer program product includes a program. The computer program product may be applied to the communication device provided in the embodiments of this application, and the program causes a computer to perform the methods executed by the communication device in the various embodiments of this application.

This application further provides a computer program. The computer program may be applied to the communication device provided in the embodiments of this application, and the computer program causes a computer to perform the methods executed by the communication device in the various embodiments of this application.

It should be understood that, in this application, the terms "system" and "network" may be used interchangeably. In addition, the terms used in this application are only for explaining specific embodiments of this application and are not intended to limit this application. The terms "first," "second," "third," and "fourth" in the specification, claims, and accompanying drawings of this application are used to distinguish between different objects and not to describe a specific order. Furthermore, the terms "include" and "have" and any variations thereof are intended to cover non-exclusive inclusion.

In the embodiments of this application, the term "indicate" may mean direct indication, indirect indication, or an association relationship. For example, "A indicates B" may mean that A directly indicates B (e.g., B can be obtained from A); it may also mean that A indirectly indicates B (e.g., A indicates C, and B can be obtained from C); or it may mean that there is an association relationship between A and B.

In the embodiments of this application, "B corresponding to A" means that B is associated with A, and B can be determined based on A. However, it should also be understood that determining B based on A does not mean that B is determined solely based on A; B may also be determined based on A and/or other information.

In the embodiments of this application, the term "correspond" may mean that there is a direct or indirect correspondence between the two, or that there is an association relationship between them, or that there is an indication and being indicated, configuration and being configured, etc.

In the embodiments of this application, "predefined" or "preconfigured" may be implemented by pre-storing corresponding codes, tables, or other means that can be used to indicate information in devices (e.g., including terminal devices and network devices). This application does not limit the specific implementation. For example, "predefined" may mean defined in a protocol.

In the embodiments of this application, the "protocol" may refer to standard protocols in the field of communications, such as LTE protocols, NR protocols, and related protocols applied to future communication systems. This application does not limit this.

In the embodiments of this application, the term "and/or" describes an association relationship between associated objects, indicating that three relationships may exist. For example, "A and/or B" may mean: A exists alone, both A and B exist, or B exists alone. In addition, the character "/" in this document generally indicates that the associated objects are in an "or" relationship.

In the embodiments of this application, "include" may mean direct inclusion or indirect inclusion. Optionally, "include" in the embodiments of this application may be replaced with "indicate" or "used to determine." For example, "A includes B" may be replaced with "A indicates B" or "A is configured to determine B."

In the various embodiments of this application, the sequence numbers of the processes do not imply an order of execution. The execution order of the processes should be determined by their functions and internal logic, and should not limit the implementation of the embodiments of this application.

In the several embodiments provided in this application, it should be understood that the disclosed systems, devices, and methods may be implemented in other ways. For example, the device embodiments described above are merely illustrative. For example, the division of units is only a logical division; in actual implementation, there may be other divisions. For example, multiple units or components may be combined or integrated into another system, or some features may be omitted or not executed. In addition, the coupling or direct coupling or communication connections between components may be implemented through some interfaces, and the indirect coupling or communication connections between devices or units may be electrical, mechanical, or otherwise.

The units described as separate components may or may not be physically separated. The components displayed as units may or may not be physical units, meaning they may be located in one place or distributed across multiple network units. Some or all of the units may be selected according to actual needs to achieve the objectives of the embodiments of this application.

In addition, the functional units in the various embodiments of this application may be integrated into one processing unit, or each unit may exist physically alone, or two or more units may be integrated into one unit.

In the foregoing embodiments, the methods may be implemented wholly or partially by software, hardware, firmware, or any combination thereof. When implemented in software, the methods may be implemented wholly or partially in the form of a computer program product. The computer program product includes one or more computer instructions. When the computer program instructions are loaded and executed on a computer, the processes or functions described in the embodiments of this application are generated in whole or in part. The computer may be a general-purpose computer, a special-purpose computer, a computer network, or another programmable device. The computer instructions may be stored in a computer-readable storage medium or transmitted from one computer-readable storage medium to another. For example, the computer instructions may be transmitted from a website, a computer, a server, or data center to another website, a computer, a server, or data center via wired (e.g., coaxial cable, optical fiber, digital subscriber line (DSL)) or wireless (e.g., infrared, wireless, microwave) means. The computer-readable storage medium may be any available medium that can be read by a computer or a data storage device such as a server or data center integrating one or more available medium. The available medium may be a magnetic medium (e.g., floppy disk, hard disk, magnetic tape), an optical medium (e.g., digital video disc (DVD)), or a semiconductor medium (e.g., solid-state disk (SSD)), etc.

The foregoing descriptions are merely specific implementations of this application, but the protection scope of this application is not limited thereto. Any person skilled in the art can easily think of changes or substitutions within the technical scope disclosed in this application, which should be covered by the protection scope of this application. Therefore, the protection scope of this application shall be subject to the protection scope of the claims.

## Claims

1. A wireless communication method, comprising:
receiving, by a terminal device, a first positioning signal transmitted by a base station;
transmitting, by the terminal device, a second positioning signal to the base station;
wherein the first positioning signal and the second positioning signal are configured for round-trip time (RTT) positioning of the terminal device, a time at which the terminal device receives the first positioning signal is a first time, a time at which the terminal device transmits the second positioning signal is a second time, and a difference between the first time and the second time is a first difference value, which is determined based on a timing advance (TA).

2. The method according to claim 1, further comprising:
transmitting, by the terminal device, a first information;
wherein the first information is configured to indicate a movement status of the terminal device.

3. The method according to claim 2, wherein the first information is configured to indicate one or more of the following:
whether the terminal device has speed measurement capability;
whether the terminal device has obtained a movement speed;
the movement speed;
whether the terminal device has obtained a movement type of the terminal device;
the movement type;
whether the terminal device has obtained a range of achievable movement speeds of the terminal device;
the range of movement speeds.

4. The method according to claim 2 or 3, wherein the transmitting, by the terminal device, the first information comprises:
transmitting, by the terminal device, the first information in response to receiving a first request information;
wherein the first request information is configured to request the terminal device to transmit the first information.

5. The method according to any one of claims 1-4, wherein the first difference value is indicated by a first time difference, the first time difference is a value obtained by taking a remainder of the first difference value divided by a subframe length, a time at which the base station transmits the first positioning signal is a third time, a time at which the base station receives the second positioning signal is a fourth time, a difference between the fourth time and the third time is a second difference value, the second difference value is indicated by a second time difference, the second time difference is a value obtained by taking a remainder of the second difference value divided by the subframe length, and a signal propagation delay Td between the terminal device and the base station satisfies: Td=(T₂+T₁)/2, wherein T₂ represents the second time difference, and T₁ represents the first time difference.

6. The method according to any one of claims 1-5, further comprising:
transmitting, by the terminal device, a second information;
wherein the second information is configured to indicate the TA.

7. The method according to claim 6, wherein the second information is configured to indicate one or more of the following:
a value of the TA;
a value obtained by taking a remainder of the value of the TA divided by the subframe length.

8. The method according to any one of claims 1-7, further comprising:
transmitting, the terminal device, a third information;
wherein the third information is configured to indicate or confirm whether the terminal device reports the first difference value.

9. The method according to any one of claims 1-8, further comprising:
receiving, by the terminal device, a fourth information;
wherein the fourth information is configured to indicate or confirm whether the terminal device reports the first difference value.

10. The method according to any one of claims 1-9, further comprising:
adjusting the TA, by the terminal device, based on detecting the first positioning signal and a synchronization signal.

11. The method according to claim 10, wherein an adjusted TA value TA2 satisfies: TA₂=TA₁-2ΔT, wherein TA₁ represents a TA value before adjustment, and ΔT represents a difference between a time at which the first positioning signal is detected and a time at which the synchronization signal is detected.

12. The method according to any one of claims 1-11, wherein transmitting, by the terminal device, the second positioning signal to the base station comprises:
not transmitting, by the terminal device, the second positioning signal and/or the first difference value in the case of the first positioning signal does not satisfy a first condition.

13. The method according to claim 12, wherein the first condition comprises one or more of the following:
the terminal device detecting the first positioning signal;
an accuracy at which the terminal device detects the first positioning signal being greater than or equal to a first threshold.

14. The method according to claim 13, wherein the first threshold satisfies one or more of the following: protocol predefinition, presetting, or configuration by the network device.

15. A wireless communication method, comprising:
transmitting, by a base station, a first positioning signal to a terminal device;
receiving, by the base station, a second positioning signal transmitted by the terminal device;
wherein the first positioning signal and the second positioning signal are configured for round-trip time (RTT) positioning of the terminal device, a time at which the terminal device receives the first positioning signal is a first time, a time at which the terminal device transmits the second positioning signal is a second time, and a difference between the first time and the second time is a first difference value, which is determined based on a timing advance (TA).

16. The method according to claim 15, further comprising:
receiving, by the base station, a first information;
wherein the first information is configured to indicate a movement status of the terminal device.

17. The method according to claim 16, wherein the first information is configured to indicate one or more of the following:
whether the terminal device has speed measurement capability;
whether the terminal device has obtained a movement speed;
the movement speed;
whether the terminal device has obtained a movement type of the terminal device;
the movement type;
whether the terminal device has obtained a range of achievable movement speeds of the terminal device;
the range of movement speeds.

18. The method according to claim 16 or 17, wherein receiving, by the base station, the first information comprises:
receiving, by the base station, the first information in response to transmitting a first request information;
wherein the first request information is configured to request the terminal device to transmit the first information.

19. The method according to any one of claims 15-18, wherein the first difference value is indicated by a first time difference, the first time difference is a value obtained by taking a remainder of the first difference value divided by a subframe length, a time at which the base station transmits the first positioning signal is a third time, a time at which the base station receives the second positioning signal is a fourth time, a difference between the fourth time and the third time is a second difference value, the second difference value is indicated by a second time difference, the second time difference is a value obtained by taking a remainder of the second difference value divided by the subframe length, and a signal propagation delay Td between the terminal device and the base station satisfies: Td=(T₂+T₁)/2, wherein T₂ represents the second time difference, and T₁ represents the first time difference.

20. The method according to any one of claims 15-19, further comprising:
transmitting, by the base station, a second information to a positioning server;
wherein the second information is configured to indicate the TA.

21. The method according to claim 20, wherein the second information is configured to indicate one or more of the following:
a value of the TA;
a value obtained by taking a remainder of the value of the TA divided by the subframe length;
the second time difference;
a difference between the first time difference and the second time difference;
wherein the time at which the base station transmits the first positioning signal is the third time, the time at which the base station receives the second positioning signal is the fourth time, the difference between the fourth time and the third time is the second difference value, the second difference value is indicated by the second time difference, and the second time difference is the value obtained by taking the remainder of the second difference value divided by the subframe length.

22. The method according to any one of claims 15-21, further comprising:
receiving, by the base station, a third information;
wherein the third information is configured to indicate or confirm whether the terminal device reports the first difference value.

23. The method according to any one of claims 15-22, further comprising:
transmitting, by the base station, a fourth information;
wherein the fourth information is configured to indicate or confirm whether the terminal device reports the first difference value.

24. The method according to any one of claims 15-23, wherein receiving, by the base station, the second positioning signal transmitted by the terminal device comprises:
not receiving, by the base station, the second positioning signal and/or the first difference value in the case of the first positioning signal does not satisfy a first condition.

25. The method according to claim 24, wherein the first condition comprises one or more of the following:
the terminal device detecting the first positioning signal;
an accuracy with which the terminal device detects the first positioning signal being greater than or equal to a first threshold.

26. The method according to claim 25, wherein the first threshold satisfies one or more of the following: protocol predefinition, presetting, or configuration by the network device.

27. A wireless communication method, comprising:
determining, by a positioning server, a first difference value based on a timing advance (TA);
wherein the positioning server performs round-trip time (RTT) positioning of a terminal device using a first positioning signal and a second positioning signal, a time at which the terminal device receives the first positioning signal transmitted by a base station is a first time, a time at which the terminal device transmits the second positioning signal to the base station is a second time, and a difference between the first time and the second time is the first difference value.

28. The method according to claim 27, further comprising:
receiving, by the positioning server, a first information;
wherein the first information is configured to indicate a movement status of the terminal device.

29. The method according to claim 28, wherein the first information is configured to indicate one or more of the following:
whether the terminal device has speed measurement capability;
whether the terminal device has obtained a movement speed;
the movement speed;
whether the terminal device has obtained a movement type of the terminal device;
the movement type;
whether the terminal device has obtained a range of achievable movement speeds of the terminal device;
the range of movement speeds.

30. The method according to claim 28 or 29, wherein receiving, by the positioning server, the first information comprises:
receiving, by the positioning server, the first information in response to transmitting a first request information;
wherein the first request information is configured to request the terminal device to transmit the first information.

31. The method according to any one of claims 27-30, wherein the first difference value is indicated by a first time difference, the first time difference is a value obtained by taking a remainder of the first difference value divided by a subframe length, a time at which the base station transmits the first positioning signal is a third time, a time at which the base station receives the second positioning signal is a fourth time, a difference between the fourth time and the third time is a second difference value, the second difference value is indicated by a second time difference, the second time difference is a value obtained by taking a remainder of the second difference value divided by the subframe length, and a signal propagation delay Td between the terminal device and the base station satisfies: Td=(T₂+T₁)/2, wherein T₂ represents the second time difference, and T₁ represents the first time difference.

32. The method according to any one of claims 27-31, further comprising:
receiving, by the positioning server, a second information;
wherein the second information is configured to indicate the TA.

33. The method according to claim 32, wherein the second information is configured to indicate one or more of the following:
a value of the TA;
a value obtained by taking a remainder of the value of the TA divided by the subframe length;
the second time difference;
a difference between the first time difference and the second time difference;
wherein the time at which the base station transmits the first positioning signal is the third time, the time at which the base station receives the second positioning signal is the fourth time, the difference between the fourth time and the third time is the second difference value, the second difference value is indicated by the second time difference, and the second time difference is the value obtained by taking the remainder of the second difference value divided by the subframe length.

34. The method according to any one of claims 27-33, further comprising:
receiving, by the positioning server, a third information;
wherein the third information is configured to indicate or confirm whether the terminal device reports the first difference value.

35. The method according to any one of claims 27-34, further comprising:
transmitting, by the positioning server, a fourth information;
wherein the fourth information is configured to indicate or confirm whether the terminal device reports the first difference value.

36. A terminal device, comprising:
a first receiving unit, configured to receive a first positioning signal transmitted by a base station;
a first transmitting unit, configured to transmit a second positioning signal to the base station;
wherein the first positioning signal and the second positioning signal are configured for round-trip time (RTT) positioning of the terminal device, a time at which the terminal device receives the first positioning signal is a first time, a time at which the terminal device transmits the second positioning signal is a second time, and a difference between the first time and the second time is a first difference value, which is determined based on a timing advance (TA).

37. The terminal device according to claim 36, the terminal device is further configured to:
transmit a first information;
wherein the first information is configured to indicate a movement status of the terminal device.

38. The terminal device according to claim 37, wherein the first information is configured to indicate one or more of the following:
whether the terminal device has speed measurement capability;
whether the terminal device has obtained a movement speed;
the movement speed;
whether the terminal device has obtained a movement type of the terminal device;
the movement type;
whether the terminal device has obtained a range of achievable movement speeds of the terminal device;
the range of movement speeds.

39. The terminal device according to claim 37 or 38, wherein transmitting the first information comprises:
transmitting the first information in response to receiving first request information;
wherein the first request information is configured to request the terminal device to transmit the first information.

40. The terminal device according to any one of claims 36-39, wherein the first difference value is indicated by a first time difference, the first time difference is a value obtained by taking a remainder of the first difference value divided by a subframe length, a time at which the base station transmits the first positioning signal is a third time, a time at which the base station receives the second positioning signal is a fourth time, a difference between the fourth time and the third time is a second difference value, the second difference value is indicated by a second time difference, the second time difference is a value obtained by taking a remainder of the second difference value divided by the subframe length, and a signal propagation delay Td between the terminal device and the base station satisfies: Td=(T₂+T₁)/2, wherein T₂ represents the second time difference, and T₁ represents the first time difference.

41. The terminal device according to any one of claims 36-40, the terminal device is further configured to:
transmit a second information;
wherein the second information is configured to indicate the TA.

42. The terminal device according to claim 41, wherein the second information is configured to indicate one or more of the following:
a value of the TA;
a value obtained by taking a remainder of the value of the TA divided by the subframe length.

43. The terminal device according to any one of claims 36-42, the terminal devic is further configured to:
transmit a third information;
wherein the third information is configured to indicate or confirm whether the terminal device reports the first difference value.

44. The terminal device according to any one of claims 36-43, the terminal device is further configured to:
receive a fourth information;
wherein the fourth information is configured to indicate or confirm whether the terminal device reports the first difference value.

45. The terminal device according to any one of claims 36-44, the terminal device is further configured to:
adjust the TA based on detecting the first positioning signal and a synchronization signal.

46. The terminal device according to claim 45, wherein an adjusted TA value TA₂ satisfies: TA₂=TA₁-2ΔT, wherein TA₁ represents a TA value before adjustment, and ΔT represents a difference between a time at which the first positioning signal is detected and a time at which the synchronization signal is detected.

47. The terminal device according to any one of claims 36-46, wherein the first transmitting unit is specifically configured to:
not transmit the second positioning signal and/or the first difference value in the case that the first positioning signal does not satisfy a first condition.

48. The terminal device according to claim 47, wherein the first condition comprises one or more of the following:
the terminal device detecting the first positioning signal;
an accuracy with which the terminal device detects the first positioning signal being greater than or equal to a first threshold.

49. The terminal device according to claim 48, wherein the first threshold satisfies one or more of the following: protocol predefinition, presetting, or configuration by the network device.

50. A base station, comprising:
a second transmitting unit, configured to transmit a first positioning signal to a terminal device;
a second receiving unit, configured to receive a second positioning signal transmitted by the terminal device;
wherein the first positioning signal and the second positioning signal are configured for round-trip time (RTT) positioning of the terminal device, a time at which the terminal device receives the first positioning signal is a first time, a time at which the terminal device transmits the second positioning signal is a second time, a difference between the first time and the second time is a first difference value, which is determined based on a timing advance (TA).

51. The base station according to claim 50, further configured to:
receive a first information;
wherein the first information is configured to indicate a movement status of the terminal device.

52. The base station according to claim 51, wherein the first information is configured to indicate one or more of the following:
whether the terminal device has speed measurement capability;
whether the terminal device has obtained a movement speed;
the movement speed;
whether the terminal device has obtained a movement type of the terminal device;
the movement type;
whether the terminal device has obtained a range of achievable movement speeds of the terminal device;
the range of movement speeds.

53. The base station according to claim 51 or 52, wherein the receiving the first information comprises:
receiving the first information in response to transmitting first request information;
wherein the first request information is configured to request the terminal device to transmit the first information.

54. The base station according to any one of claims 50-53, wherein the first difference value is indicated by a first time difference, the first time difference is a value obtained by taking a remainder of the first difference value divided by a subframe length, a time at which the base station transmits the first positioning signal is a third time, a time at which the base station receives the second positioning signal is a fourth time, a difference between the fourth time and the third time is a second difference value, the second difference value is indicated by a second time difference, the second time difference is a value obtained by taking a remainder of the second difference value divided by the subframe length, and a signal propagation delay Td between the terminal device and the base station satisfies: Td=(T₂+T₁)/2, wherein T₂ represents the second time difference, and T₁ represents the first time difference.

55. The base station according to any one of claims 50-54, the base station is further configured to:
transmit a second information to a positioning server;
wherein the second information is configured to indicate the TA.

56. The base station according to claim 55, wherein the second information is configured to indicate one or more of the following:
a value of the TA;
a value obtained by taking a remainder of the value of the TA divided by the subframe length;
the second time difference;
a difference between the first time difference and the second time difference;
wherein the time at which the base station transmits the first positioning signal is the third time, the time at which the base station receives the second positioning signal is the fourth time, the difference between the fourth time and the third time is the second difference value, the second difference value is indicated by the second time difference, and the second time difference is the value obtained by taking the remainder of the second difference value divided by the subframe length.

57. The base station according to any one of claims 50-56, the base station is further configured to:
receive a third information;
wherein the third information is configured to indicate or confirm whether the terminal device reports the first difference value.

58. The base station according to any one of claims 50-57, further configured to:
transmit a fourth information;
wherein the fourth information is configured to indicate or confirm whether the terminal device reports the first difference value.

59. The base station according to any one of claims 50-58, wherein the second receiving unit is specifically configured to:
not receive the second positioning signal and/or the first difference value if the first positioning signal does not satisfy a first condition.

60. The base station according to claim 59, wherein the first condition comprises one or more of the following:
the terminal device detecting the first positioning signal;
an accuracy with which the terminal device detects the first positioning signal being greater than or equal to a first threshold.

61. The base station according to claim 60, wherein the first threshold satisfies one or more of the following: protocol predefinition, presetting, or configuration by the network device.

62. A positioning server, comprising:
a determining unit, configured to determine a first difference value based on a timing advance (TA);
wherein the positioning server performs round-trip time (RTT) positioning of a terminal device using a first positioning signal and a second positioning signal, a time at which the terminal device receives the first positioning signal transmitted by a base station is a first time, a time at which the terminal device transmits the second positioning signal to the base station is a second time, and a difference between the first time and the second time is the first difference value.

63. The positioning server according to claim 62, the positioning server is further configured to:
receive a first information;
wherein the first information is configured to indicate a movement status of the terminal device.

64. The positioning server according to claim 63, wherein the first information is configured to indicate one or more of the following:
whether the terminal device has speed measurement capability;
whether the terminal device has obtained a movement speed;
the movement speed;
whether the terminal device has obtained a movement type of the terminal device;
the movement type;
whether the terminal device has obtained a range of achievable movement speeds of the terminal device;
the range of movement speeds.

65. The positioning server according to claim 63 or 64, wherein the receiving the first information comprises:
receiving the first information in response to transmitting first request information;
wherein the first request information is configured to request the terminal device to transmit the first information.

66. The positioning server according to any one of claims 62-65, wherein the first difference value is indicated by a first time difference, the first time difference is a value obtained by taking a remainder of the first difference value divided by a subframe length, a time at which the base station transmits the first positioning signal is a third time, a time at which the base station receives the second positioning signal is a fourth time, a difference between the fourth time and the third time is a second difference value, the second difference value is indicated by a second time difference, the second time difference is a value obtained by taking a remainder of the second difference value divided by the subframe length, and a signal propagation delay Td between the terminal device and the base station satisfies: Td=(T₂+T₁)/2, wherein T₂ represents the second time difference, and T₁ represents the first time difference.

67. The positioning server according to any one of claims 62-66, the positioning server is further configured to:
receive a second information;
wherein the second information is configured to indicate the TA.

68. The positioning server according to claim 67, wherein the second information is configured to indicate one or more of the following:
a value of the TA;
a value obtained by taking a remainder of the value of the TA divided by the subframe length;
the second time difference;
a difference between the first time difference and the second time difference;
wherein the time at which the base station transmits the first positioning signal is the third time, the time at which the base station receives the second positioning signal is the fourth time, the difference between the fourth time and the third time is the second difference value, the second difference value is indicated by the second time difference, and the second time difference is the value obtained by taking the remainder of the second difference value divided by the subframe length.

69. The positioning server according to any one of claims 62-68, further configured to:
receive a third information;
wherein the third information is configured to indicate or confirm whether the terminal device reports the first difference value.

70. The positioning server according to any one of claims 62-69, further configured to:
transmit a fourth information;
wherein the fourth information is configured to indicate or confirm whether the terminal device reports the first difference value.

71. A terminal device, comprising a memory and a processor, wherein the memory is configured to store a program, and the processor is configured to invoke the program in the memory to cause the terminal device to perform the method according to any one of claims 1-14.

72. A base station, comprising a memory and a processor, wherein the memory is configured to store a program, and the processor is configured to invoke the program in the memory to cause the base station to perform the method according to any one of claims 15-26.

73. A positioning server, comprising a memory and a processor, wherein the memory is configured to store a program, and the processor is configured to invoke the program in the memory to cause the positioning server to perform the method according to any one of claims 27-35.

74. A device, comprising a processor, configured to invoke a program from a memory to cause the apparatus to perform the method according to any one of claims 1-35.

75. A chip, comprising a processor, configured to invoke a program from a memory to cause a device equipped with the chip to perform the method according to any one of claims 1-35.

76. A computer-readable storage medium, having a program stored thereon, wherein the program causes a computer to perform the method according to any one of claims 1-35.

77. A computer program product, comprising a program, wherein the program causes a computer to perform the method according to any one of claims 1-35.

78. A computer program, wherein the computer program causes a computer to perform the method according to any one of claims 1-35.
